Europäisches Patentamt

European Patent Office

Office européen des brevets

(11) Veröffentlichungsnummer: **0 271 763 B1**

(12) **EUROPÄISCHE PATENTSCHRIFT**

(45) Veröffentlichungstag der Patentschrift: **13.03.91**

(51) Int. Cl.⁵: **H02M 1/092, H01J 61/34**

(21) Anmeldenummer: **87117768.9**

(22) Anmeldetag: **01.12.87**

(54) **Thyristor-Zündvorrichtung.**

(30) Priorität: **15.12.86 DE 3642799**

(43) Veröffentlichungstag der Anmeldung:
**22.06.88 Patentblatt 88/25**

(45) Bekanntmachung des Hinweises auf die
Patenterteilung:
**13.03.91 Patentblatt 91/11**

(84) Benannte Vertragsstaaten:
**DE FR GB IT NL**

(56) Entgegenhaltungen:
**EP-A- 0 144 645**
**DE-A- 2 514 528**
**DE-B- 1 538 116**
**US-A- 2 906 901**

(73) Patentinhaber: **Heimann GmbH**
**Weher Köppel 6 Postfach 30 07**
**W-6200 Wiesbaden 1(DE)**

(72) Erfinder: **Debus, Gerhard, Dipl.-Ing.**
**Auf dem Zilles 2**
**W-6270 Idstein(DE)**
Erfinder: **Bartscher, Bernd, Dipl.-Ing.**
**Friedhofstrasse 3a**
**W-6209 Hohenstein 4(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft eine Thyristor-Zündvorrichtung mit einer Blitzlampe, von der mindestens ein Lichtleiter zu mindestens einem zu zündenden Thyristor führt.

Bei Thyristoren besteht bei bestimmten Anwendungsgebieten, z.B. für die Hochspannungs-Gleichstrom-Übertragung, die Forderung einer galvanischen Entkopplung der Ansteuerung von Lastkreis. Eine solche galvanische Entkopplung kann durch Lichtzündung, d.h. durch Übertragung von Lichtimpulsen auf einen lichtempfindlichen Teil des Thyristors erfolgen. Zur galvanisch entkoppelten Zündung ist es bekannt, eine Gasentladungslampe vorzusehen, die optisch mit dem Thyristor gekoppelt ist, z.B. über einen Lichtleiter.

Der Erfindung liegt die Aufgabe zugrunde, eine Thyristor-Zündvorrichtung der eingangs genannten Art konstruktiv so zu gestalten, daß die Zündung einer Vielzahl von Thyristoren mit Hilfe einer Blitzlampe möglich ist.

Diese Aufgabe ist erfindungsgemäß dadurch gelöst, daß die Blitzlampe in einem rohrförmigen Gehäuse angeordnet ist, das von mindestens einem radialen Kanal zur Aufnahme eines Lichtleiters durchsetzt ist. Die erfindungsgemäße Thyristor-Zündvorrichtung erlaubt bei langgestreckter Ausbildung die Anordnung einer Vielzahl von Lichtleitern in einem sie umschliessenden, rohrförmigen Gehäuse wobei diese Lichtleiter in radialen Kanälen das Gehäuse durchsetzen. Auf diese Weise ist die Zündung mehrerer hundert Thyristoren möglich.

Das Gehäuse kann in besonders zweckmäßiger Ausbildung im Bereich des Plasmakanales aus Metall bestehen und als Zündelektrode benutzt werden. Wenn es einen größeren Durchmesser als die Blitzlampe hat, kann es in Längsrichtung von einem Kühlmittel zur Kühlung der Blitzlampe durchströmt sein. Eine besonders zweckmäßige Lösung der genannten Aufgabe besteht darin, daß das Verhältnis Länge zu Durchmesser des Plasmakanales im Bereich 60 : 1 bis 140 : 1 und die Länge selbst im Bereich von 20 bis 150 mm liegt. Auf diese Weise ist demgemäß eine schlanke, langgestreckte Blitzröhre gebildet, die sich besonders gut zur Zündung einer Vielzahl von Thyristoren eignet.

Die Zündschaltung für die Blitzlampe kann in der Weise ausgebildet sein, daß zwei Stromquellen vorgesehen sind, von denen die eine zur Erzeugung eines Simmerstromes dient, der eine Vorionisation aber noch keine Zündung bewirkt, und die zweite durch einen Schalter zur Zündung zusätzlich an die Blitzlampe anschaltbar ist. Dabei stellt der Simmerstrom insbesondere einen geringen Phasen-Jitter, d.h. eine geringe zeitliche Abweichung der Pulsanstiegszeit vom zeitlichen Mittelwert, sicher. Zur Erzeugung eines optimalen Pulses mit einem Pulsrücken kann eine dritte Stromquelle vorgesehen sein, die der zweiten nach der Zündung parallel schaltbar ist, d.h. die die Zündung nach Abklingen der Impulsspitze noch aufrecht erhält.

Die Erfindung ist nachfolgend anhand eines in der Zeichnung dargestellten Ausführungsbeispieles näher erläutert. Es zeigen:

Fig. 1   die wesentlichen Teile einer Thyristor-Zündvorrichtung nach der Erfindung,

Fig. 2   eine Einzelheit der Fig. 1,

Fig. 3   eine praktische Realisierung der Thyristor-Zündvorrichtung nach Fig. 1 zur Zündung einer Vielzahl von Thyristoren,

Fig. 4   eine Zündschaltung für die Thyristor-Zündvorrichtung gemäß Fig. 1, und

Fig. 5   ein Beispiel für einen durch die Zündschaltung gemäß Fig. 4 erzielbaren Zündimpuls.

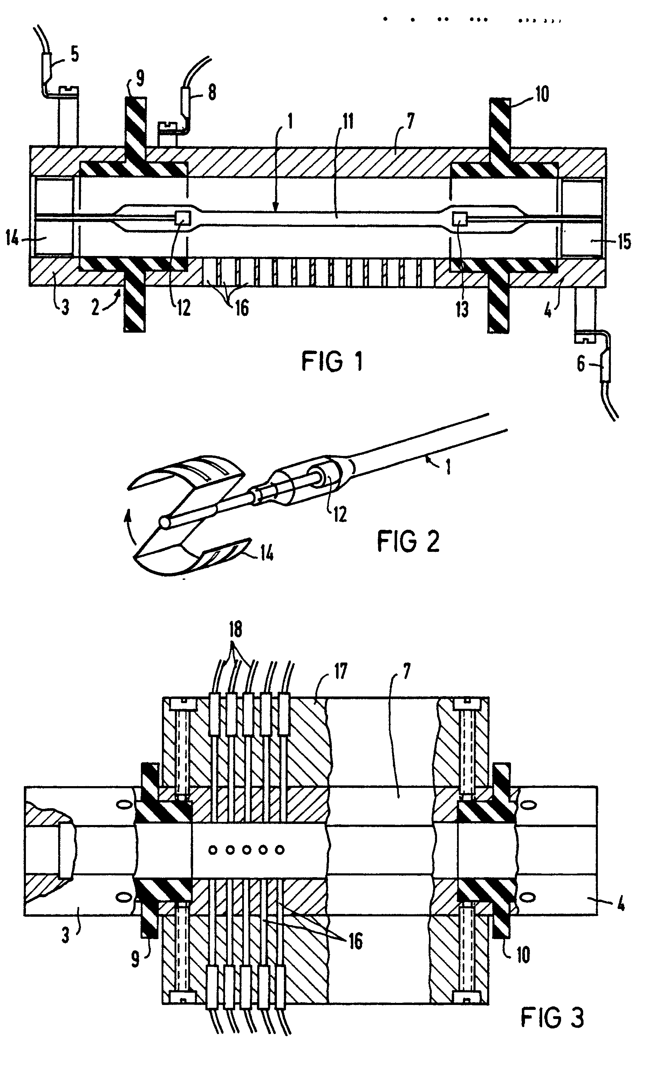

In der Fig. 1 ist eine Blitzlampe 1 dargestellt, die in einem rohrförmigen Gehäuse 2 angeordnet ist. Das rohrförmige Gehäuse 2 besitzt zwei metallische Endteile 3, 4, die mit Anschlüssen 5, 6 für die Speisung der Blitzlampe 1 verbunden sind, sowie einen metallischen Mittelteil 7, der mit einer Zündleitung 8 verbunden ist. Die Teile 3, 4, 7 sind durch Isolierstoff-Zwischenstücke 9, 10 elektrisch voneinander isoliert.

Die Blitzlampe 1 weist einen Plasmakanal 11 auf, an dessen Enden zwei Elektroden 12, 13 liegen, die auf der Außenseite der Blitzlampe 1 mit Blattfedern 14, 15 verbunden sind, welche auf der Innenseite der Endteile 3, 4 anliegen und so eine elektrische Verbindung zwischen den Anschlüssen 5, 6 und den Elektroden 12, 13 herstellen. Die Fig. 2 zeigt die Ausbildung der Blattfeder 14 in perspektifischer Darstellung.

Der Mittelteil 7 ist von einer Anzahl von radialen Kanälen 16 durchsetzt, durch die Lichtleiter mit ihren Enden auf den Plasmakanal 11 gerichtet werden können. Durch diese Lichtleiter können Lichtblitze zu Thyristoren zu deren optischer Zündung weitergeleitet werden.

Der Durchmesser des von den Teilen 3, 4, 7 gebildeten Gehäuses 2 ist größer als der Durchmesser der Blitzlampe 1, so daß das Gehäuse 2 in seiner Längsrichtung von einem Kühlmittel, z.B. von Kühlluft, durchströmt werden kann.

Die Fig. 3 zeigt eine praktische Ausführung, bei der auf dem Mittelteil 7 noch eine metallische Hülse 17 sitzt. Die Hülse 17 ist zusammen mit dem Mittelteil 7 mit miteinander fluchtenden, die Teile 7, 17 radial und sternförmig durchsetzenden Kanälen versehen, in denen Lichtleiter 18 liegen. Die Blitzlampe 1 ist in der Fig. 3 nicht dargestellt. Durch die Ausführung gemäß Fig. 3 ist es möglich, mit Hilfe einer einzigen Blitzlampe eine große Anzahl von Thyristoren optisch zu zünden.

Besonders günstige Verhältnisse hinsichtlich des zeitlichen Verlaufes der erzeugten Lichtimpulse (steiler Impulsanstieg, hohe Lichtleistung am Ende des Lichtleiters, konstante Lichtintensität und Zündverzugszeit von Lichtimpuls zu Lichtimpuls und hohe Lebensdauer) sind erzielbar, wenn das Verhältnis der Länge zum Durchmesser des Plasmakanales 11 im Bereich 60 : 1 bis 140 : 1 und die Länge selbst im Bereich von 20 bis 150 mm liegt. Um die Leuchtdichte des Plasmas möglichst stabil zu halten, d.h. die Lichtintensitätsvariation von Lichtimpuls zu Lichtimpuls zu minimieren, muß die effektive Brennlänge des Plasmas während des Betriebes konstant gehalten werden. Dies gelingt dann gut, wenn die Enden der in erweiterten Endteilen der Blitzlampe 1 liegenden Elektroden 12, 13 möglichst nahe an die Enden des eine Kapillare bildenden Plasmakanales 11 herangebracht werden.

Die Blattfedern 14, 15 dienen nicht nur zur Kontaktierung, sondern auch zur mechanischen Halterung der Blitzlampe 1 im Gehäuse 2 und zur Wärmeabfuhr.

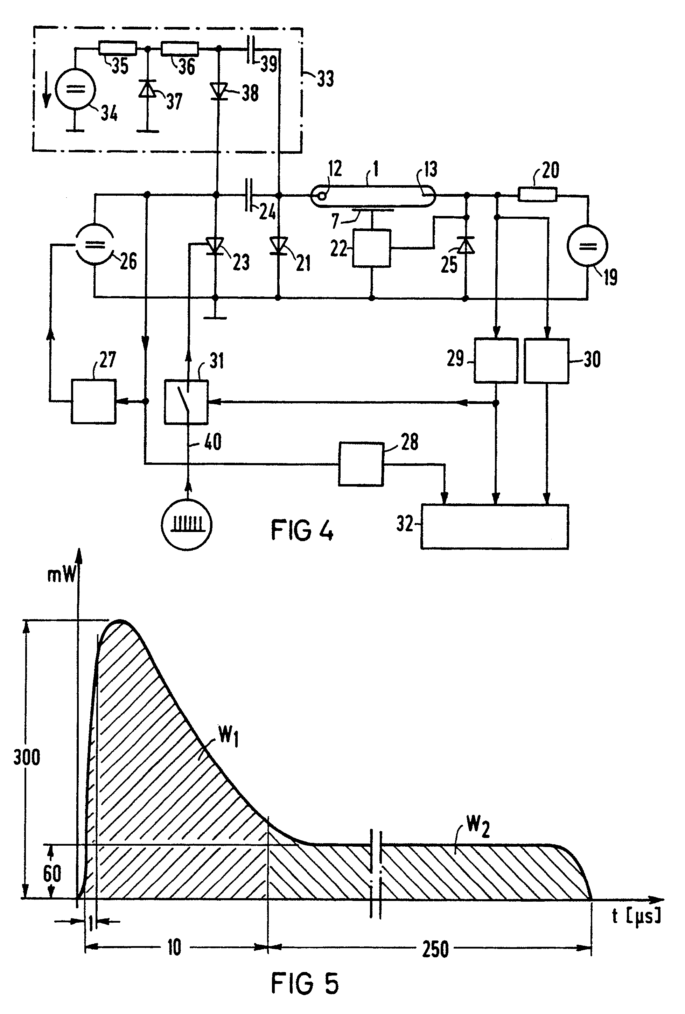

Die Fig. 4 zeigt eine Zündschaltung für die Blitzlampe 1, bei der die vom Mittelteil 7 gebildete Zündelektrode und die Elektroden 12, 13 nur schematisch dargestellt sind. Zur Erfüllung der Forderung nach einem steilen Lichtimpulsanstieg bei einem kleinen Phasen-Jitter ist eine Vorionisation der Blitzlampe 1 mit Hilfe eines Simmerstromes vorgesehen. Der Simmerstrom Isim wird von einer Stromquelle 19 erzeugt, welche zusammen mit einem Widerstand 20, der Blitzlampe 1 und einer Diode 21 einen Simmer-Stromkreis bildet. Zur Erzeugung des Simmerstromes ist am Mittelteil 7 ein Zündgenerator 22 angeschlossen. Der eigentliche Entladungsstromkreis ist von einem Thyristor 23, einem Entladekondensator 24, der Blitzlampe 1 und einer Diode 25 gebildet. Die Aufladung des Ladekondensators 24 erfolgt durch eine Stromquelle 26. Komparatoren 27, 28, 29, 30 dienen zur Steuerung und Sicherung der Zündschaltung. Lichtimpulse werden durch einen Sperrschalter 31 ausgelöst. Eine Fehlererfassungsschaltung 32 ist mit den Komparatoren 28, 29, 30 verbunden.

Nach dem Einschalten der Netzspannung wird durch die Stromquelle 19 eine Gleichspannung von beispielsweise 600 V erzeugt, die über den Widerstand 20 an der Anode der noch nicht gezündeten Blitzlampe 1 liegt. Eine Anodenspannung in der Größenordnung von 300 V veranlaßt den Zündgenerator 22, Zündimpulse an den Mittelteil 7 der Blitzlampe 1 abzugeben. Hierdurch entstehen in der Gasfüllung der Blitzlampe 1 freie Ionen, die aufgrund des Potentialunterschiedes zwischen den Elektroden 12, 13 einen geringen Strom verursachen, der die Vorionisation aufrecht erhält. Dieser Simmerstrom Isim fließt im Stromkreis 19, 20, 1, 21. Der Simmerstrom verursacht einen Spannungsabfall am Widerstand 20, der bei ausreichender Emissionseigenschaft des Kathodenmaterials die Spannung zwischen den Elektroden 12, 13 so weit abfallen läßt, daß der Zündgenerator 22 wieder abgeschaltet wird. Der Simmerstrom bleibt jedoch danach aufrecht erhalten.

Voraussetzung für den Pulsstrombetrieb zur Erzeugung eines Lichtimpulses ist ein korrekter Simmerstrombetrieb. Der Komparator 29 gibt über den Sperrschalter 31 das Steuersignal für den Thyristor 23 frei, wenn die Spannung zwischen den Elektroden 12, 13 der Blitzlampe 1 unter einem vorgegebenen Wert von z.B. 200 V liegt.

Der Pulsstrom wird durch periodische Stoßendladung des Kondensators 24 erzeugt. Der Kondensator 24 wird zunächst durch die Stomquelle 26 im Stromkreis 21, 24, 26 auf eine Spitzenspannung von bis zu 3,5 kV aufgeladen. Beim Erreichen der maximalen Ladespannung schaltet der Komparator 27 die Stromquelle 26 ab. Die Stoßentladung erfolgt durch den Thyristor 23, der ein Hochspannungsthyristor ist. Der Thyristor 23 erhält zur Zündung der Blitzlampe 1 über den Sperrschalter 31 ein Zündsignal auf der Leitung 40. Der Entladestrom fließt von der linken, positiven Elektrode des Kondensators 24 über den durchgeschalteten Thyristor 23, über die Diode 25 und die Blitzlampe 1 zur rechten, negativen Elektrode des Kondensators 24.

Die periodische Entladung des Kondensators 24 wird bei unkorrektem Simmerverhalten der Blitzlampe 1, d.h. in dem Fall, in dem sich die Simmerspannung aufgrund eines zu geringen Simmerstromes auf Werte größer als 200 V erhöht, durch Sperren des Ansteuersignales für den Thyristor 23 über den Sperrschalter 31 unterbrochen. Gleichzeitig erfolgt über die Fehlererfassungsschaltung 32 eine Fehlermeldung. Eine alterungsbedingte Abnahme des Simmerstromes führt zu einem Anstieg der Simmerspannung. Das Überschreiten eines Maximalwertes von z.B. 180 V wird durch den Komparator 30 der Fehlererfassungsschaltung 32 gemeldet und führt zu einer Vorwarnung über den bevorstehenden Ausfall der Blitzlampe 1. Über den Komparator 28 wird ein Ausfall der periodischen Ladespannungszeitfunktion, z.B. beim Ausfall der Stromquelle 26, des Thyristors 23, des Kondensators 24 oder der Diode 21 signalisiert.

Die beschriebene Schaltung hat folgende Vorteile:

Die Stromquellen 19, 26 führen gemeinsames Massepotential gleicher Polarität, d.h. es sind keine "schwimmenden" Stromquellen mit den besonders bei Hochspannung vorhandenen technischen und konstruktiven Problemen vorhanden.

Der Thyristor 23 führt kathodenseitig Massepotential und ist daher einfach ansteuerbar, es sind keine zusätzlichen Maßnahmen zur Isolation der Kathode erforderlich und der Impulstransformator für die Gatesteuerung kann entfallen.

Die Kathodenemission der Blitzlampe 1 kann durch Anodenspannungsmessung während des Simmerbetriebes in den Impulspausen einfach überwacht werden, so daß Röhrenalterungen leicht fest stellbar sind.

Aufgrund der Verwendung der Stromquelle 19 zur Erzeugung eines Simmerstromes ergibt sich ein einfacher Aufbau.

Bei geringeren Anforderungen an die Anstiegszeit der Lichtimpulse können die Stromquellen 19 und 26 dieselben Spannungen haben. Es kann also in diesem Fall mit einer einzigen Stromquelle gearbeitet werden.

Von den zur Entkopplung dienenden Dioden 21, 25 wird bei Forderung einer möglichst geringen Schaltzeit entweder eine hohe Sperrspannung bei kleinem zulässigen mittleren Gleichstrom (Diode 21) oder eine geringe Sperrspannung bei hohem zulässigen periodischen Impulsstrom (Diode 25) gefordert.

Die gesteuerte Stromquelle 26 und die Stromquelle 19 können als Sperrwandler ausgeführt werden, die mit einer Zwischenkreisspannung von 24 V eingespeist werden. Sie lassen somit problemlosen Akku-Puffer-Betrieb zu und können von der Notstromversorgung bei Hochspannungs-Gleichstrom-Übertragungsanlagen gespeist werden.

Die Zündschaltung gemäß Fig. 4 kann noch durch einen Zusatz 33 ergänzt werden, der eine Stromquelle 34, zwei Widerstände 35, 36, zwei Dioden 37, 38 und einen Kondensator 39 aufweist. Der Zusatz 33 dient zur Erzeugung eines Pulsrükkens in den erzeugten Lichtimpulsen. Ein durch die gesamte Zündschaltung gemäß Fig. 4 mit dem Zusatz 33 erzeugbarer Lichtimpuls ist in der Fig. 5 dargestellt. Er besitzt einen steilen Anstieg, einen flacheren Abfall und an seinem Ende einen Pulsrücken. Zur Erzeugung des Pulsrückens lädt die Stromquelle 34 den Kondensator 39 kontinuierlich auf beispielsweise 600 V auf. Wenn im Entladungsmoment die Spannung am Kondensator 24 unter die Ladespannung des Kondensators 39 von 600 V fällt, wird der Kondensator 39 über die Diode 38 ebenfalls auf die Blitzlampe 1 geschaltet.

In der Fig. 5 ist auf der Ordinate die Lichtleistung in Milliwatt und auf der Abszisse die Zeit in Mikrosekunden aufgetragen. Die Energie $W_1$ wird dabei vom Kondensator 24 und die Energie $W_2$ vom Kondensator 39 geliefert.

**Ansprüche**

1. Thyristor-Zündvorrichtung mit einer Blitzlampe (1), von der mindestens ein Lichtleiter (18) zu mindestens einem zu zündenden Thyristor führt, **dadurch gekennzeichnet**, daß daß die Blitzlampe (1) in einem rohrförmigen Gehäuse (2) angeordnet ist, das von mindestens einem radialen Kanal (16) zur Aufnahme eines Lichtleiters durchsetzt ist.

2. Thyristor-Zündvorrichtung nach Anspruch 1, **dadurch gekennzeichnet**, daß das Gehäuse (2) im Bereich des Plasmakanales (11) aus Metall besteht und als Zündelektrode benutzt ist.

3. Thyristor-Zündvorrichtung nach Anspruch 1 oder 2, **dadurch gekennzeichnet**, daß das Gehäuse (2) einen größeren Durchmesser als die Blitzlampe (1) hat und in Längsrichtung von einem Kühlmittel durchströmt ist.

4. Thyristor-Zündvorrichtung nach einem der Ansprüche 1 bis 3, **dadurch gekennzeichnet**, daß die Elektroden (12, 13) der Blitzlampe (1) an ihren äußeren Enden Federn (14, 15) aufweisen, die an der Innenwand der Endteile (3, 4) des Gehäuses (2) anliegen und dort mit Stromzuführungen (5, 6) kontaktieren.

5. Thyristor-Zündvorrichtung nach einem der Ansprüche 1 bis 4, **dadurch gekennzeichnet**, daß das Verhältnis Länge zu Durchmesser des Plasmakanales (11) im Bereich 60 : 1 bis 140 : 1 und die Länge selbst im Bereich von 20 bis 150 mm liegt.

6. Thyristor-Zündvorrichtung nach einem der Ansprüche 1 bis 5, **dadurch gekennzeichnet**, daß die Elektroden (12, 13) in erweiterten Endteilen der Blitzlampe (1) nahe den Enden des eine Kapillare bildenden Plasmakanales (11) liegen.

7. Thyristor-Zündvorrichtung nach einem der Ansprüche 1 bis 6, **gekennzeichnet durch** eine Zündschaltung (Fig. 4) mit zwei Stromquellen (19, 24), von denen die eine (19) zur Erzeugung eines Simmerstromes dient, der eine Vorionisation aber noch keine Zündung bewirkt und die zweite (24) durch einen Schalter (23) zur Zündung zusätzlich an die Blitzlampe (1) anschaltbar ist.

8. Thyristor-Zündvorrichtung nach Anspruch 7, **gekennzeichnet durch** eine dritte Stromquelle (39), die der zweiten Stromquelle (24) zur Erzeugung eines Pulsrückens nach der Zündung parallel schaltbar ist.

## Claims

1. A thyristor ignition device with a flash lamp (1) at least one light guide (18) of which leads to at least one thyristor to be ignited, characterised in that the flash lamp (1) is arranged in a tubular housing (2), through which passes at least one radial channel (16) for accommodating a light guide.

2. A thyristor ignition device according to claim 1, characterised in that, in the region of the plasma channel (11), the housing (2) consists of metal, and is used as an ignition electrode.

3. A thyristor ignition device according to claim 1 or 2, characterised in that the housing (2) has a larger diameter than the flash lamp (1) and has a cooling agent flowing through it in the longitudinal direction.

4. A thyristor ignition device according to one of claims 1 to 3, characterised in that the electrodes (12,13) of the flash lamp (1) have on their outer ends springs (14,15), which abut the inner wall of the end parts (3,4) of the housing (2) and are in contact there with current supplies (5,6).

5. A thyristor ignition device according to one of claims 1 to 4, characterised in that the ratio of length to diameter of the plasma channel (11) lies in the region of 60 : 1 to 140 : 1 and the length itself lies in the region of 20 to 150 mm.

6. A thyristor ignition device according to one of claims 1 to 5, characterised in that the electrodes (12,13) lie in extended end parts of the flash lamp (1), close to the ends of a plasma channel (11) forming a capillary.

7. A thyristor ignition device according to one of claims 1 to 6, characterised by an ignition circuit (Figure 4) with two power sources (19, 24), one of which serves to generate a simmer current, which effects a pre-ionisation but no ignition, and the second (24) is able to be connected additionally to the flash lamp (1) by a switch (23) for ignition.

8. A thyristor ignition device according to claim 7, characterised by a third power source (39), which is able to be connected in parallel to the second power source (24) for generating a pulse tail after the ignition.

## Revendications

1. Dispositif d'amorçage de thyristors comportant une lampe éclair (1), à partir de laquelle au moins un guide de lumière (18) s'étend jusqu'à au moins un thyristor devant être amorcé, caractérisé par le fait que la lampe éclair (1) est montée dans un boîtier tubulaire (2), qui est traversé par au moins un canal radial (16) servant à loger un guide de lumière.

2. Dispositif d'amorçage d'interrupteur suivant la revendication 1, caractérisé par le fait que le boîtier (2) est métallique dans la zone du canal à plasma (11) et est utilisé comme électrode d'amorçage.

3. Dispositif d'amorçage de thyristors suivant la revendication 1 ou 2, caractérisé par le fait que le boîtier (2) possède un diamètre supérieur à celui de la lampe éclair (1) et est traversé par un fluide de refroidissement dans une direction longitudinale.

4. Dispositif d'amorçage de thyristors suivant l'une des revendications 1 à 3, caractérisé par le fait que les électrodes (12,13) de la lampe éclair (1) possèdent, sur leurs extrémités extérieures, des ressorts (14,15), qui s'appliquent contre la paroi intérieure des parties d'extrémité (3,4) du boîtier (2) et y sont en contact avec des conducteurs d'alimentation en courant (5,6).

5. Dispositif d'amorçage de thyristors suivant l'une des revendications 1 à 4, caractérisé par le fait que le rapport de la longueur au diamètre du canal à plasma (11) se situe dans la gamme comprise entre 60:1 et 140:1 et que la longueur elle-même se situe dans la gamme comprise entre 20 et 150 mm.

6. Dispositif d'amorçage de thyristors suivant l'une des revendications 1 à 5, caractérisé par le fait que les électrodes (12,13) sont situées dans des parties d'extrémité élargies de la lampe éclair (1), à proximité des extrémités du canal à plasma (11) constituant un capillaire.

7. Dispositif d'amorçage de thyristors suivant l'une des revendications 1 à 6, caractérisé par un circuit d'amorçage (figure 4) comportant deux sources de courant (19,24), dont l'une (19) sert à produire un courant de préionisation, qui provoque une préionisation, mais encore aucun amorçage, tandis que la seconde source de courant (24) peut être raccordée en supplément, pour l'amorçage, par un interrupteur (23) à la lampe éclair (1).

8. Dispositif d'amorçage de thyristors suivant la revendication 7, caractérisé par une troisième source de courant (39), qui peut être branchée en parallèle avec la seconde source de courant (24) pour produire un dos d'impulsion après l'amorçage.

FIG 1

FIG 2

FIG 3

FIG 4

FIG 5